# EUROPEAN PATENT SPECIFICATION

(11) **EP 3 173 216 B1**
(45) Date of publication and mention of the grant of the patent: **11.04.2018**
(21) Application number: 15196589.4
(22) Date of filing: 26.11.2015
(51) Int. Cl.: B29C 70/08, B29C 70/24, D05B 85/00, B29C 65/54, B29L 31/30

(54) **METHOD AND NEEDLE FOR REINFORCING CELLULAR MATERIALS**
VERFAHREN UND NADEL ZUR VERSTÄRKUNG VON ZELLULÄREM MATERIAL
AIGUILLE ET PROCÉDÉ POUR LE RENFORCEMENT DE MATÉRIAUX CELLULAIRES

(43) Date of publication of application: 31.05.2017
(73) Proprietor: Airbus Operations GmbH, 21129 Hamburg (DE)
(72) Inventor: Jörn, Paul, 21129 Hamburg (DE); Müller, Markus, 21129 Hamburg (DE)
(74) Representative: Isarpatent

(56) References cited:
- DE-A1-102007 051 422
- FR-A1- 2 565 262
- GB-A- 703 934
- US-A- 4 541 349
- US-A1- 2009 252 917

## Description

The present invention pertains to a method for reinforcing a cellular material and to a needle utilized in such a method. The invention particularly pertains to reinforcing a cellular material as a core for sandwich-type components. The invention more particularly relates to reinforced cellular materials for sandwich-type components of aircraft or spacecraft.

Although applicable to manufacture and/or reinforce various components, e.g. for use in the transport industry in landborne, airborne, or waterborne vehicles, the present invention and the problem on which it is based will be explained in greater detail with reference to components for use in commercial aircraft.

Due to their superior rigidity or strength to density ratio sandwich constructions are broadly utilized in the field of aircraft construction. Sandwich-type components often consist of an upper and a lower cover layer or surface, between which a honeycomb-like core structure is arranged for increasing the rigidity of the component, wherein the core structure is composed of vertically extending cells with hexagonal cross section. The sandwich construction may also have other properties, for example, acoustic or thermal insulation properties, in case the core structure is realized accordingly.

Rigid cellular materials are used as an alternative to a design with a honeycomb structure. In comparison with honeycomb structures, cellular or foamed materials provide certain advantages with respect to thermal and acoustic insulation, as well as the component manufacture. By utilizing sewing techniques for incorporating fibers or threads into components made of cellular materials excellent mechanical properties may be achieved in comparison with sandwich constructions that have a honeycomb-like core structure of comparable density. After a resin infiltration process, the regions penetrated by the fibers contribute to the mechanical reinforcement of the cellular material. In alternative methods, cellular materials are directly penetrated with pre-cured pins made of fibers and cured matrix material.

In many known sewing methods, e.g. the one described in US 6,187,411 B1, a needle initially penetrates the cellular material and simultaneously introduces the thread into the cellular material. During the piercing of the cellular material, the thread essentially extends parallel to the needle over the entire length. The hole size of the piercing hole therefore is defined by the needle diameter and the thickness of the thread. Consequently, the hole remaining after the retraction of the needle from the cellular material may be large in relation to the thickness of the introduced thread. This leads to the region of the hole that is not filled out by fibers to be filled with resin after the resin infiltration such that the mechanical properties are essentially based on the infiltrated resin.

DE 102005024408 A1 describes a technique known as "tied foam core", which constitutes an improvement of the reinforcement of cellular materials with fibers or fiber bundles, where the introduced fibers are more or less solely responsible for the improvement of the mechanical properties of the cellular material core. To this end, a through-hole is first produced in the cellular material extending from a first surface to a second surface by piercing the cellular material with a needle. The needle then takes hold of a fiber bundle with a hook at the second surface, which is consecutively pulled back with the needle into the through-hole, so that a cross-sectional surface of the through-hole is basically completely filled out by the fiber bundle.

US2009 252 917 A1 discloses a method for reinforcing a cellular material according to the preamble of claim 1.

GB 703 934 discloses a needle according to the preamble of claim 12. For certain structural applications there is a need for very high core densities and/or core heights (i.e. thickness of the respective sandwich component) to enable good weight performance and damage tolerance as well as to sustain high bending moments. The core thickness and core density that are achievable are however often limited by the maximum length and/or stability of the utilized needle.
It is an object of the invention to provide solutions for reinforcing core materials with higher density and/or thickness while maintaining a good weight to cost ratio. This object is achieved by a method having the features of claim 1 and a needle having the features of claim 12.
According to a first aspect of the invention, a method for reinforcing a cellular material comprises producing a through-hole in the cellular material that extends from a first surface of the cellular material to a second surface of the cellular material. The method further comprises reaching through the through-hole from the first surface of the cellular material to the second surface of the cellular material. The method further comprises taking hold of at least one fiber bundle at the second surface of the cellular material. The method further comprises pulling the at least one fiber bundle into the through-hole in the cellular material. Producing the through-hole in the cellular material includes perforating the cellular material with a rotating and/or oscillating needle.

According to a second aspect of the invention, a needle according to claim 12 is provided. One idea of the present invention is to improve the tied foam core technology by employing a needle in a way that effectively reduces the force needed to penetrate a core of cellular material and thus open up the possibility to manufacture higher core densities and thicknesses without any significant cost or weight increase.
The tied foam core technique is based on the notion of eliminating the simultaneous introduction of the fiber bundles for reinforcing a cellular material during the production of the holes. A through-hole is initially produced in a cellular material in a first step in order to subsequently pull a fiber bundle made available on the other side of the second surface into the through-hole in the direction of the first surface. The cellular materials in question may have three-dimensional geometries with opposing surfaces, wherein parallel surfaces are only present in simple instances. Sandwich constructions frequently feature three-dimensional curvatures, abrupt changes in thickness and the like.
The present invention employs a needle with a vibrating/oscillating and/or rotating motion in order to better penetrate the cellular material. For this purpose, a conventional needle may be replaced by a needle according to the invention, which basically serves as a drill bit with a cutting/drilling edge and/or point. However, according to the invention, a needle may be also used with a vibrating/oscillating motion without any rotation. Depending on the use case at hand, various frequencies of such an oscillating motion may be advantageous. For example, the needle oscillations may be in the ultrasonic regime. The person of skill will readily acknowledge that other oscillation frequencies may be preferable depending on the specific application. At the same time the needle according to the invention is configured with a hook to receive a fiber bundle. A needle according to the invention thus combines the features of a drill bit with those of a more conventional sewing needle. For the oscillating and/or rotating (that is drilling) motion, the needle may be connected to a mechanical and/or electrical drill mechanism, which provides torque and axial force to create the through-hole. The needle may have the smallest shaft diameter possible so as to avoid producing a through-hole with an excessively large cross section. The cross-sectional surface of the needle shaft may, in particular, not exceed the thickness of the fiber bundle to be pulled through the through-hole (or not be larger than twice the single thickness of the fiber bundle in the stretched-out initial state). With the method and needle according to the invention it is possible to manufacture higher core densities and thicknesses without any significant cost or weight increase, e.g. core thicknesses above 100 mm and core densities of more than 70 kg/m³. Needles according to the invention may have a shaft thickness of less than a millimeter. However, shaft thicknesses of one or several millimeters, e.g. 2, 3, or 4 mm, may be preferred for specific use cases.

The term cellular material used in the context of the present invention refers to any core material that is suitable for use as a core material in sandwich constructions. The cellular materials preferably consist of actual cellular materials, but may in the context of the present invention also consist of textiles such as, for example, felts or any other non-woven fabric. For example, the described method just as well allows the unproblematic utilization of textile semi-finished products, particularly felts or non-woven fabrics, in order to improve their properties in another dimension. In the context of the present invention, the term fiber bundles refers to rovings consisting of a plurality of individual fibers or monofilaments, individual fibers as well as threads that are produced by twisting individual fibers or fiber bundles. The term thickness of a fiber bundle refers to the sum of all individual fibers in compressed form in the context of the present invention.

The cellular materials may consist of any arbitrary cellular materials, but high-quality PMI rigid cellular materials may be advantageous in the field of aeronautics. Naturally, it is also possible to utilize other cellular materials that consists, for example, of polyvinyl chloride or polyurethane. Instead of utilizing the method according to the invention for reinforcing cellular materials, the inventive method may also be used for reinforcing textiles such as, for example, felts or any other non-woven fabrics that, in the context of the invention, can also be subsumed under the generic term cellular materials.

The through-holes can be produced in the cellular material in any angular position. The orientation of the through-holes can be individually adapted, in particular, to the respective shape of the cellular material to be reinforced as well as to the load situations to be expected under operating conditions. The method makes it possible to custom-tailor a sandwich structure to a specific load and application.

As mentioned above, the at least one fiber bundle is made available on the other side of the second surface of the cellular material. In order to easily take hold of the fiber bundle, it may be held in the region of the through-hole, for example, in a straight, stretched-out fashion in the vicinity of the second surface in order to reliably take hold of the fiber bundles with a hook or the like. When taking hold of such a straight, stretched-out fiber bundle in order to pull the fiber bundle through the through-hole, it may be initially doubled such that a loop is formed. Due to this measure, the number of (mono) filaments that ultimately extend through the through-hole is twice as high as the number of the individual fibers of the fiber bundle in the initial state. Alternatively, it would be possible to already produce a loop to be taken hold of or grabbed such that the folding process is eliminated. The fiber materials used may consist, for example, of aramide fibers, carbon fibers, nylon fibers, polyester fibers, metal fibers or glass fibers, wherein any other fiber materials can also be utilized.

The method according to the invention may make it possible to improve the specific mechanical properties of cellular materials used in a variety of fields. Reinforced cellular materials of this type are primarily used for applications, in which it is important to fulfill strict rigidity requirements with low material costs and little weight. The field of aeronautics and astronautics is one classic example of a field in which such reinforced cellular materials are used, namely because the requirements with respect to the rigidity or strength of the structural components and the least weight possible always apply in this case. In aeronautical and astronautical engineering, for example, the method according to the invention may make it possible to manufacture flaps, rudders or fuselage structures as well as paneling parts or parts of the interior by utilizing the method according to the invention. In addition, the inventive method can also be utilized in the automobile, construction or furniture industry as well as any other branches of industry, in which the materials used frequently must fulfill strict rigidity requirements and the weight needs to be simultaneously minimized. The method according to the invention can also be used in all instances, in which not only the aforementioned rigidity properties, but also thermal and/or acoustic insulation properties are of importance because these are inherent properties of the materials used in the method due to their ability to be easily compressed.

In order to reinforce a cellular material with fiber bundles by means of the described method, it is necessary to carry out the method several times so as to introduce fiber bundles into the cellular material at various locations. Therefore, the method begins anew at another location after the at least one fiber bundle was pulled into the cellular material through the through-hole. Instead of merely producing one hole at one location of the cellular material with this method in order to subsequently pull through a fiber bundle, the method may also be carried out simultaneously at various locations. For example, the cellular material could be simultaneously perforated by a plurality of needles and a corresponding number of fiber bundles could be made available on the other side of the cellular material such that they can be taken hold of or grabbed by the needles and pulled into the cellular material through the through-holes produced by the needles. It is also possible to produce a fiber bundle that connects several holes if the process of making available the fiber bundles is configured in a suitable fashion. Advantageous embodiments and improvements of the present invention are found in the subordinate claims.
According to an embodiment of the method, the needle may drill into the cellular material to produce the through-hole. The drilling may be performed by a rotational movement of the needle, which may be configured as a drill bit with helical flutes and a cutting edge.

According to the invention, the cylindrical shaft is formed with at least one helical flute. In particular, the cylindrical shaft may be formed with several helical flutes. The helical flutes are particularly suited to efficiently remove excess material from a drilling process.

According to an embodiment of the method, the at least one fiber bundle may be taken hold of by being hooked in the needle. For this purpose, the needle may feature a point with an eyelet that is provided with an opening on one side such that the fiber bundle can be inserted into the eyelet in the region of the needle point through this lateral opening. However, other configurations of the needle may also provide means of hooking the fiber bundle.

According to an embodiment of the method, the at least one fiber bundle may be hooked in a groove integrated into the needle. Correspondingly, according to an embodiment of the needle, the hook may be formed as a groove within the cylindrical shaft of the needle. The needle thus may be configured as a drill bit with integrated hook-like groove for picking and holding the fiber bundle. A drilling may be performed by rotation of the needle. In a further step, a fiber bundle may be inserted into the groove of the needle in order to hook the fiber bundle and pull it into the through-hole.

According to an embodiment of the needle, the groove is at least partly running around a lateral surface of the cylindrical shaft. This embodiment offers a centric load introduction into the needle. The cylindrical shaft may be formed in a solid way without any significant apertures, undercuts, holes or the like that may weaken the structure of the shaft. Due to this, a needle with optimal strength and load capacity may be provided.

According to an embodiment of the method, the needle is heated prior to and/or during producing the through-hole. Heat may thus be added to the penetration process in order to ease it. The needle may be directly heated prior to the perforation of the cellular material and/or designed such that a rotation or oscillating motion creates friction heat during the penetration of the cellular material.

According to an embodiment of the method, producing the through-hole in the cellular material may include pre-drilling the through-hole. For example, a drilling step may be included before using the needle to perforate the cellular material and reach through the through-hole to pull the fiber bundle. This drilling step may be performed by a separate drill or the like that may be mechanical, optical (e.g. a laser), or acoustical (e.g. ultra-sonic) or similar. Alternatively, any other known drilling method may be employed. Like this, it is possible to ease the subsequent penetration of the needle, e.g. in cases of very high densities of the cellular material. The needle may then subsequently widen the pre-drilled through-hole.

According to an embodiment of the method, pulling the at least one fiber bundle into the through-hole may include pulling the needle into the through-hole such that it is followed by the least one fiber bundle. The fiber bundle therefore does not extend parallel to the shaft of the needle when it is pulled into the through-hole, but rather follows the same and merely overlaps the needle in the region of the point of the needle, in which the needle has its minimum thickness and only contributes slightly to the thickness of the fiber bundle. This prevents the through-hole being produced from undesirably becoming larger when the needle is retracted.

According to an embodiment of the method, the through-hole may be produced with a cross-sectional surface that is smaller than double the thickness of the fiber bundle to be pulled therethrough such that the fiber bundle is compressed while being pulled through. In order to prevent the through-holes produced in the cellular material from being predominantly filled with resin such that the weight of the sandwich-type component would be undesirably increased and the rigidity properties would be diminished, the through-holes may have a cross-sectional surface that is smaller than the thickness of the fiber bundle being pulled therethrough such that the fiber bundle is compressed while it is pulled through and the through-hole possibly is slightly widened. This not only makes it possible to maintain a low density of the sandwich-type component, but also to ensure that the individual fibers of the fiber bundle essentially extend through the through-hole in a straight fashion because the individual fibers are pulled straight during this compression process.

According to an embodiment of the method, the method may further comprise shearing off the at least one fiber bundle pulled into the through-hole such that it ends flush with at least one of the first surface and the second surface. According to an alternative embodiment of the method, the method may further comprise placing the at least one fiber bundle pulled into the through-hole against at least one of the first surface and the second surface. If the cellular material to be reinforced consists of a sandwich construction, the first surface and/or the second surface can be formed by a cover surface or a cover layer of the sandwich structure. In this case, the previously produced through-hole extends through the cellular material as well as the two cover layers that cover the cellular material such that the fiber bundle also extends through these three layers. Naturally, it would also be possible to introduce fiber bundles into a bare cellular material in the above-described fashion and to subsequently provide both sides with corresponding cover layers, wherein the protruding ends of the fiber bundles are placed and bonded or laminated between the cover layer and the cellular material.

According to an embodiment of the method, the method may further comprise forming a cover layer on at least one of the first surface and the second surface. The method may thus manufacture and/or reinforce a sandwich-type component. The sandwich-type component may comprises a core of cellular material with at least one through-hole and at least one fiber bundle arranged in the through-hole. The core of cellular material may thus contain a plurality of through-holes that extend between the first and the second surface. In this case, a fiber bundle is pulled through each of these through-holes. The individual fibers of the fiber bundle may extend through the respective through-holes in a straight fashion in this case. The through-hole may have a cross-sectional surface that essentially is completely filled out by the at least one fiber bundle. The cross-sectional surface of the at least one through-hole may be smaller than double the thickness of the at least one fiber bundle pulled therethrough such that the fiber bundle is compressed when it is pulled into the through-hole. The sandwich-type component may further comprise cover layers that are formed on the first surface and the second surface, one cover layer per surface. The at least one fiber bundle may end flush with at least one of the first surface and the second surface or may be flatly placed against at least one of the first surface and the second surface.

Such a sandwich-type component may have a good strength or rigidity and a low weight. This optimized ratio between rigidity and weight is based on the fact that the through-holes essentially are completely filled out by the fiber bundles such that the resin content in the through-holes can be maintained at a low level. Due to the rigidity properties of the sandwich-type component, it can be used for all applications in which it is important to achieve good rigidities while simultaneously maintaining the weight as low as possible. One important application for the inventive sandwich-type component therefore is the field of aeronautics and astronautics because the weight minimization naturally always needs to be observed in this case. In the field of aeronautics and astronautics, it is possible to manufacture, for example, flaps, rudders or fuselage structures as well as paneling parts or parts of the interior in the form of the sandwich-type component according to the invention. Other fields of applications are, for example, the automobile industry, the construction industry or the furniture industry as well as any other branches of industry, in which an optimized ratio between rigidity and weight is frequently of importance.

Since the sandwich-type components typically consist of at least three layers (a core and two cover layers), the plurality of through-holes may directly extend from one cover layer to the other cover layer, i.e., the first and/or the second surface of the sandwich-type component is/are formed by a cover layer. The fiber bundles consequently may extend through the entire sandwich-type component including the cover layers.

According to an embodiment of the method, the method may further comprises filling the through-hole containing the at least one fiber bundle with a matrix material, e.g. a resin or the like. In order to ultimately produce the bond between the individual fibers as well as between the fibers and the cellular material, the through-hole containing the at least one fiber bundle can be infiltrated with a resin in an ensuing step. The infiltration may be realized, for example, by applying a vacuum to one side of the cellular material in order to draw a resin situated on the other side through the through-hole. Alternatively, any other known infiltration method may be employed.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 shows an initial state of a method according to an embodiment of the invention.
Fig. 2 shows several steps of the method following the initial state in Fig. 1.
Fig. 3 shows a further step of the method following the steps in Fig. 2.
Fig. 4 shows a cellular material with an introduced fiber bundle after the steps in Figs. 2 to 3.
Fig. 5 shows a sandwich-type component reinforced with a method according to another embodiment of the invention.
Fig. 6 shows a sandwich-type component reinforced with a method according to yet another embodiment of the invention.
Fig. 7 shows a needle according to a further embodiment of the invention.
Fig. 8 schematically shows selected steps of the method of Figs. 1 to 4.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

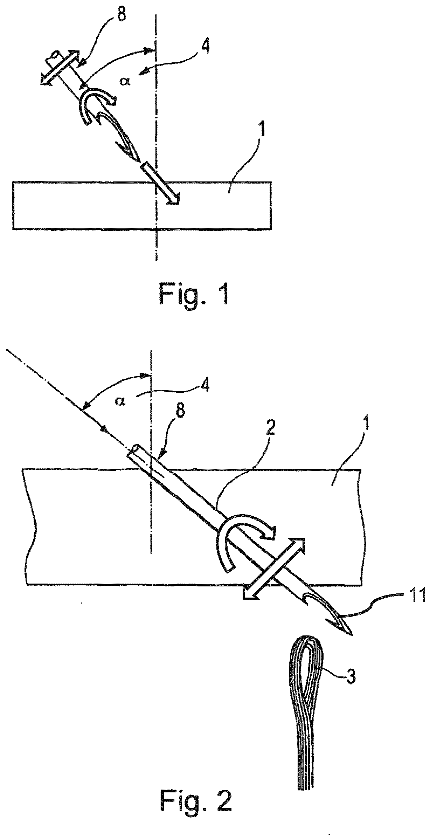

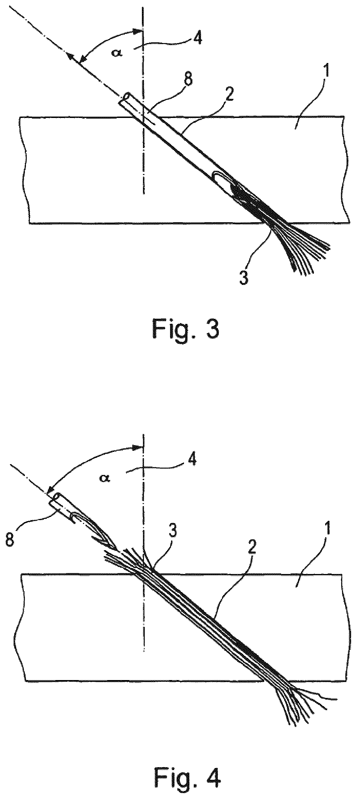

Fig. 1 shows a needle 8 before the perforation of a cellular material 1. The needle 8 features an eyelet region on its tip that is open on one side and that serves as a hook 11 for holding a fiber bundle 3 (cf. Figs. 2 and 3). The cellular material 1 consists, for example, of a PMI rigid cellular material or a cellular material of lower quality, for example, a cellular PVC material or a cellular polyurethane material. The cellular material 1 may also consist of a textile material such as, for example, a felt or any other non-woven fabric. According to Fig. 1, the needle 8 is aligned relative to the vertical line by an angle α. The angle α can be varied between 0 and 90° in order to introduce a fiber bundle into the cellular material 1 at an arbitrary angle α. This may make it possible to achieve a "custom-tailored" reinforcement so as to take especially into account certain load situations, to which the cellular material 1 will be subjected in the sandwich construction. Although the angle α is merely illustrated two-dimensionally due to the two-dimensional figure, this angle α naturally may also be a solid angle such that the through-hole and the fiber bundle subsequently situated therein can be arranged in the cellular material 1 at an arbitrary solid angle.

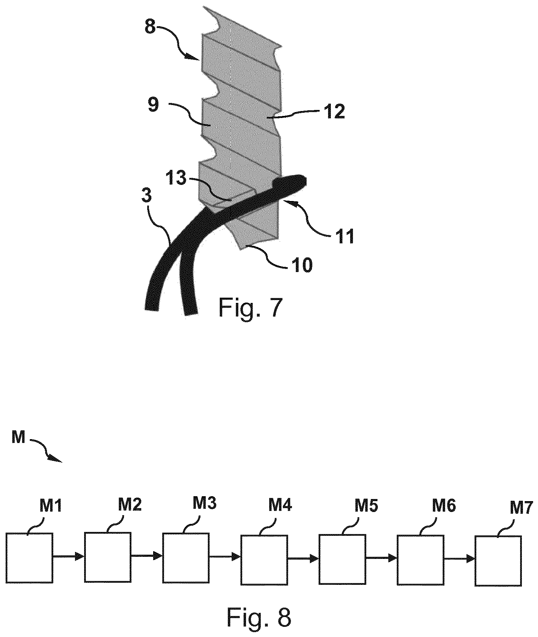

In one embodiment the needle 8 may have a circular shaft 9 that this tapered to a tip of the needle 8. In the region of the tip, the needle 8 may feature an eyelet that, however, is provided with an opening on one side in order to the thusly introduce a fiber bundle 3 into the eyelet region of the needle 8. The eyelet region of the needle 8 therefore may consist of a first limb that continuously extends to the tip and a second limb that extends back in the direction of the circular shaft 9, however, without reaching said shaft from the tip (in a convexly curved fashion). However, as will be explained in conjunction with Fig. 7, the needle 8 may be configured in various different ways, in particular it may be formed as a "drilling needle" combining features of a sewing needle with those of a drill bit. Arrows indicate in Fig. 1 the perforating motion of the needle 8 as it will be further detailed in conjunction with Fig. 2 below. This particularly includes a rotating and/or vibrating and/or oscillating motion of the needle 8.

Fig. 2 shows a stage of the method M, in which the needle 8 has just penetrated the cellular material 1 with its point. Due to this penetration, a through-hole 2 was produced in the cellular material 1 that extends through the cellular material 1 at a solid angle α. A fiber bundle 3 (for example, a 24K roving) that was shaped into a loop in the immediate vicinity of the underside of the cellular material 1 is situated underneath the cellular material 1 in the region of the exit point of the needle 8. This loop of the fiber bundle 3 therefore can be taken hold of or grasped by the needle 8 in order to pull the fiber bundle 3 into the cellular material 1 when the needle 8 is retracted.

As it is indicated by arrows in Fig. 2, perforating the cellular material 1 with the needle 8 includes rotating and/or vibrating and/or oscillating the needle 8. The rotating and/or vibrating motion of the needle 8 effectively reduces the force needed to penetrate the cellular material 1 and thus open up the possibility to manufacture higher core densities and thicknesses without any significant cost or weight increase. The needle 8 may be configured as shown in Fig. 2. Alternatively, the needle 8 may however also be shaped similar to a drill, e.g. as shown in Fig. 7, for achieving a better penetration performance by "drilling" the through-hole 2. To further ease the penetration of the cellular material 1, the method M may further comprise heating the needle 8 and/or pre-drilling the through-hole 2 with a separate drill or the like, e.g. in form of a mechanical drill or a laser or similar. For example, the through-hole 2 may be pre-drilled with a separate drill and then be widened in a second drill and/or a piercing step with a needle 8 that may be formed similar to a drill bit.

Although the fiber bundle 3 is illustrated in the form of a loop in Fig. 2 for reasons of clearness, the fiber bundle 3 may actually be arranged underneath the cellular material 1 and stretched straight parallel thereto in order to take hold of this stretched fiber bundle 3 underneath the cellular material 1 with the aid of the needle 8. The fiber bundle 3 may have a single thickness S such that the looped fiber bundle section according to Fig. 2 approximately has a double thickness 2S.

In Fig. 3, the needle 8 is already retracted again from the cellular material 1. Due to this retraction, the fiber bundle 3 taken hold of or grabbed by the needle 8 is pulled into the through-hole 2 on the underside of the cellular material 1. The fiber bundle 3 may be compressed when it penetrates into the through-hole. This compression may occur in case the needle 8 and therefore the through-hole 2 have a cross-sectional surface that is smaller than the double thickness 2S of the fiber bundle being pulled through. The individual fibers of the fiber bundle 3 are essentially aligned straight and tightly pressed against one another in the through-opening 2 due to this compression and the tensile force exerted upon the fiber bundle by the needle 8 such that only very fine intermediate spaces remain between the individual fibers.

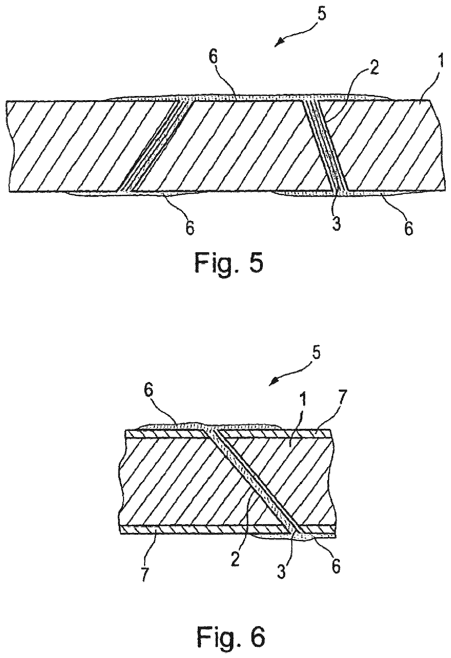

In Fig. 4, the entire fiber bundle 3 is pulled into the cellular material 1 at the angle α, wherein the needle 8 was already decoupled from the fiber bundle 3. For example, the fiber bundle 3 can now be cut off flush with both sides of the cellular material 1 in order to subsequently infiltrate the through-hole 2 with a resin, as shown in Fig. 5. Alternatively, the ends of the fiber bundle 3 shown in Fig. 4 can be placed against both surfaces of the cellular material 1 and bonded thereto. The bonding can be realized, for example, by laminating cover layers 7 that, however, are not illustrated in Fig. 5 to both surfaces of the cellular material such that the ends of the fiber bundles 3 tightly adjoin and are bonded to the surfaces of the cellular material 1.

Instead of merely producing one through-hole 2 in the core of the sandwich-type component in the above-described fashion in order to pull through a fiber bundle 3, it is also possible to additionally penetrate the cover layers 7 with the needle 8 as shown in Fig. 6 in order to subsequently pull a fiber bundle 3 through the entire sandwich-type component 5, wherein the ends of said fiber bundle may once again be flatly placed against and bonded to the cover layers 7 or cut off flush with the cover layers 7 as shown in Fig. 6. The sandwich-type component 5 may be, for example, a part of the interior lining of a passenger cabin of an aircraft or spacecraft. Alternatively, the sandwich-type component 5 may be part of a flap, a rudder or a general fuselage structure of the aircraft or spacecraft.

Fig. 7 shows a needle 8 according to a further embodiment of the invention. This needle 8 may alternatively be employed in the method M shown in Figs. 1 to 4. Contrary to the needle 8 shown in Fig. 2, the needle 8 in Fig. 7 is formed as a "drilling needle". The needle 8 features a cylindrical shaft 9 that has helical flutes 12 encircling a lateral surface of the cylindrical shaft 9. At a tip of the cylindrical shaft 9 a cutting edge 10 is provided. Near the tip of the cylindrical shaft 9 a hook 11 is integrated into the cylindrical shaft 9 to take hold of a (looped) fiber bundle 3. The hook 11 is formed as a groove 13 within the cylindrical shaft 9, which is at least partly circulating the lateral surface of the cylindrical shaft 9. The groove 13 is similarly formed to the helical flutes 12, however it is arranged under a different inclination angle than the helical flutes 12. The person of skill will be aware that multiple different embodiments of the hook 11 may be provided that serve the purpose of hooking in a fiber bundle 3 and that the depicted configuration is of purely exemplary nature.

Fig. 8 schematically shows selected steps of the method M of Figs. 1 to 4. The method M comprises under M1 producing a through-hole 2 in a cellular material 1 that extends from a first surface of the cellular material 1 to a second surface of the cellular material 1. This step includes perforating the cellular material 1 with a needle 8 that is rotating and/or oscillating. In particular, the needle 8 may drill into the cellular material 1 to produce the through-hole 2. To this end, the at least one fiber bundle 3 may be taken hold of by being hooked in a groove 13 integrated into the needle 8. Optionally, the needle 8 may additionally be heated. The heating may be done prior to and/or during perforating the cellular material 1. Further, the through-hole 2 may be optionally pre-drilled before the cellular material 1 is perforated with the needle 8.

The method M further comprises under M2 reaching through the through-hole 2 from the first surface of the cellular material 1 to the second surface of the cellular material 1. The method M further comprises under M3 taking hold of at least one fiber bundle 3 at the second surface of the cellular material 1. The method M further comprises under M4 pulling the at least one fiber bundle 3 into the through-hole 2 in the cellular material 1.

Optionally, the method M may comprise under M5 shearing off the at least one fiber bundle 3 pulled into the through-hole 2 such that it ends flush with at least one of the first surface and the second surface. Alternatively, the method M may optionally comprise under M5' placing the at least one fiber bundle 3 pulled into the through-hole 2 against at least one of the first surface and the second surface. Further, the method M may optionally comprise under M6 forming a cover layer 7 on at least one of the first surface and the second surface. Further, the method M may optionally comprise under M7 filling the through-hole 2 containing the at least one fiber bundle 3 with a matrix material.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### List of reference signs

- 1: reinforced cellular material
- 2: through-hole
- 3: fiber bundle
- 4: perforation angle α
- 5: sandwich-type component
- 6: flatly adjoining fiber end
- 7: cover layer
- 8: needle
- 9: cylindrical shaft
- 10: cutting edge
- 11: hook
- 12: helical flutes
- 13: groove
- 100: aircraft
- M: method
- M1: method step
- M2: method step
- M3: method step
- M4: method step
- M5: method step
- M6: method step
- M7: method step

## Claims

1. Method (M) for reinforcing a cellular material (1), comprising:
producing (M1) a through-hole (2) in the cellular material (1) that extends from a first surface of the cellular material (1) to a second surface of the cellular material (1);
reaching (M2) through the through-hole (2) from the first surface of the cellular material (1) to the second surface of the cellular material (1);
taking hold (M3) of at least one fiber bundle (3) at the second surface of the cellular material (1); and
pulling (M4) the at least one fiber bundle (3) into the through-hole (2) in the cellular material (1); **characterized in that** producing (M1) the through-hole (2) in the cellular material (1) includes perforating the cellular material (1) with a rotating and/or oscillating needle (8).

2. Method (M) according to claim 1, wherein the needle (8) drills into the cellular material (1) to produce the through-hole (2).

3. Method (M) according to one of the claims 1 to 2, wherein producing (M1) the through-hole (2) in the cellular material (1) includes pre-drilling the through-hole (2).

4. Method (M) according to one of the claims 1 to 3, wherein the at least one fiber bundle (3) is taken hold of by being hooked in the needle (8).

5. Method (M) according to claim 4, wherein the at least one fiber bundle (3) is hooked in a groove (13) integrated into the needle (8).

6. Method (M) according to one of the claims 1 to 5, wherein the needle (8) is heated prior to and/or during producing (M1) the through-hole (2).

7. Method (M) according to one of the claims 1 to 6, wherein pulling (M4) the at least one fiber bundle (3) into the through-hole (2) includes pulling the needle (8) into the through-hole (2) such that it is followed by the least one fiber bundle (3).

8. Method (M) according to one of the claims 1 to 7, wherein the through-hole (2) is produced with a cross-sectional surface that is smaller than double the thickness of the fiber bundle (3) to be pulled therethrough such that the fiber bundle (3) is compressed while being pulled through.

9. Method (M) according to one of the claims 1 to 8, further comprising:
shearing off (M5) the at least one fiber bundle (3) pulled into the through-hole (2) such that it ends flush with at least one of the first surface and the second surface; or
placing (M5') the at least one fiber bundle (3) pulled into the through-hole (2) against at least one of the first surface and the second surface.

10. Method (M) according to one of the claims 1 to 9, further comprising:
forming (M6) a cover layer (7) on at least one of the first surface and the second surface.

11. Method (M) according to one of the claims 1 to 10, further comprising:
filling (M7) the through-hole (2) containing the at least one fiber bundle (3) with a matrix material.

12. Needle (8) for reinforcing a cellular material (1) with a method (M) according to one of the claims 1 to 11, the needle (8) comprising:
a cylindrical shaft (9);
a cutting edge (10) at a tip of the cylindrical shaft (9); and
a hook (11) integrated into the cylindrical shaft (9) to take hold of the fiber bundle (3); **characterized in that** the cylindrical shaft (9) is formed with at least one helical flute (12)
configured to remove excess material from a drilling process.

13. Needle (8) according to claim 12, wherein the hook (11) is formed as a groove (13) within the cylindrical shaft (9).

14. Needle (8) according to claim 13, wherein the groove (13) is at least partly running around a lateral surface of the cylindrical shaft (9).

## Patentansprüche

1. Verfahren (M) zum Verstärken eines Zellmaterials (1), umfassend:
Herstellen (M1) eines Durchgangslochs (2) in dem Zellmaterial (1), das sich von einer ersten Fläche des Zellmaterials (1) zu einer zweiten Fläche des Zellmaterials (1) erstreckt,
Reichen (M2) durch das Durchgangsloch (2) von der ersten Fläche des Zellmaterials (1) zu der zweiten Fläche des Zellmaterials (1),
Fassen (M3) mindestens eines Faserbündels (3) an der zweiten Fläche des Zellmaterials (1) und
Ziehen (M4) des mindestens einen Faserbündels (3) in das Durchgangsloch (2) in dem Zellmaterial (1),
**dadurch gekennzeichnet, dass**
ein Herstellen (M1) des Durchgangslochs (2) in dem Zellmaterial (1) ein Perforieren des Zellmaterials (1) mit einer sich drehenden und/oder schwingenden Nadel (8) aufweist.

2. Verfahren (M) nach Anspruch 1, wobei die Nadel (8) in das Zellmaterial (1) bohrt, um das Durchgangsloch (2) herzustellen.

3. Verfahren (M) nach einem der Ansprüche 1 bis 2, wobei ein Herstellen (M1) des Durchgangslochs (2) in dem Zellmaterial (1) ein Vorbohren des Durchgangslochs (2) aufweist.

4. Verfahren (M) nach einem der Ansprüche 1 bis 3, wobei das mindestens eine Faserbündel (3) durch Einhaken in die Nadel (8) gefasst ist.

5. Verfahren (M) nach Anspruch 4, wobei das mindestens eine Faserbündel (3) in eine Nut (13) eingehakt ist, die in der Nadel (8) integriert ist.

6. Verfahren (M) nach einem der Ansprüche 1 bis 5, wobei die Nadel (8) vor und/oder während eines Herstellens (M1) des Durchgangslochs (2) erwärmt wird.

7. Verfahren (M) nach einem der Ansprüche 1 bis 6, wobei ein Ziehen (M4) des mindestens einen Faserbündels (3) in das Durchgangsloch (2) ein Ziehen der Nadel (8) in das Durchgangsloch (2) derart aufweist, dass sie von dem mindestens einen Faserbündel (3) gefolgt wird.

8. Verfahren (M) nach einem der Ansprüche 1 bis 7, wobei das Durchgangsloch (2) mit einer Querschnittsfläche hergestellt ist, die kleiner ist als die doppelte Dicke des Faserbündels (3), das derart dadurch zu ziehen ist, dass das Faserbündel (3), während es durchgezogen wird, komprimiert wird.

9. Verfahren (M) nach einem der Ansprüche 1 bis 8, ferner umfassend:
Abscheren (M5) des mindestens einen Faserbündels (3), das in das Durchgangsloch (2) derart gezogen ist, dass es mit mindestens einer der ersten Fläche und der zweiten Fläche bündig endet, oder
Platzieren (M5') des mindestens einen Faserbündels (3), das in das Durchgangsloch (2) gezogen ist, gegen mindestens eine der ersten Fläche und der zweiten Fläche.

10. Verfahren (M) nach einem der Ansprüche 1 bis 9, ferner umfassend:
Bilden (M6) einer Deckschicht (7) auf mindestens einer der ersten Fläche und der zweiten Fläche.

11. Verfahren (M) nach einem der Ansprüche 1 bis 10, ferner umfassend:
Befüllen (M7) des Durchgangslochs (2), welche das mindestens eine Faserbündel (3) enthält, mit einem Matrixmaterial.

12. Nadel (8) zum Verstärken eines Zellmaterials (1) mit einem Verfahren (M) nach einem der Ansprüche 1 bis 11, wobei die Nadel (8) Folgendes umfasst:
einen zylindrischen Schaft (9),
eine Schneide (10) an einer Spitze des zylindrischen Schafts (9) und
einen Haken (11), der in den zylindrischen Schaft (9) integriert ist, um das Faserbündel (3) zu fassen,
**dadurch gekennzeichnet, dass**
der zylindrische Schaft (9) mit mindestens einer spiralförmigen Rille (12) gebildet ist, die ausgestaltet ist, um überschüssiges Material von einem Bohrvorgang zu entfernen.

13. Nadel (8) nach Anspruch 12, wobei der Haken (11) als Nut (13) innerhalb des zylindrischen Schafts (9) gebildet ist.

14. Nadel (8) nach Anspruch 13, wobei die Nut (13) zumindest teilweise um eine seitliche Fläche des zylindrischen Schafts (9) verläuft.

## Revendications

1. Procédé (M) destiné à renforcer un matériau cellulaire (1), consistant à :
réaliser (M1) un trou débouchant (2) dans le matériau cellulaire (1) qui s'étend depuis une première surface du matériau cellulaire (1) jusqu'à une seconde surface du matériau cellulaire (1) ;
arriver (M2) à travers le trou débouchant (2) depuis la première surface du matériau cellulaire (1) jusqu'à la seconde surface du matériau cellulaire (1) ;
se saisir (M3) d'au moins un faisceau de fibres (3) au niveau de la seconde surface du matériau cellulaire (1) ; et
tirer (M4) l'au moins un faisceau de fibres (3) jusque dans le trou débouchant (2) dans le matériau cellulaire (1) ;
**caractérisé en ce que**
le fait de réaliser (M1) le trou débouchant (2) dans le matériau cellulaire (1) consiste à perforer le matériau cellulaire (1) avec une aiguille rotative et/ou oscillante (8).

2. Procédé (M) selon la revendication 1, dans lequel l'aiguille (8) perce dans le matériau cellulaire (1) afin de réaliser le trou débouchant (2).

3. Procédé (M) selon une des revendications 1 à 2, dans lequel le fait de réaliser (M1) le trou débouchant (2) dans le matériau cellulaire (1) consiste à pré-percer le trou débouchant (2).

4. Procédé (M) selon une des revendications 1 à 3, dans lequel l'au moins un faisceau de fibres (3) est saisi en étant accroché dans l'aiguille (8).

5. Procédé (M) selon la revendication 4, dans lequel l'au moins un faisceau de fibres (3) est accroché dans une rainure (13) intégrée dans l'aiguille (8).

6. Procédé (M) selon une des revendications 1 à 5, dans lequel l'aiguille (8) est chauffée avant et/ou pendant la réalisation (M1) du trou débouchant (2).

7. Procédé (M) selon une des revendications 1 à 6, dans lequel le fait de tirer (M4) l'au moins un faisceau de fibres (3) jusque dans le trou débouchant (2) consiste à tirer l'aiguille (8) jusque dans le trou débouchant (2) de telle sorte qu'elle est suivie de l'au moins un faisceau de fibres (3).

8. Procédé (M) selon une des revendications 1 à 7, dans lequel le trou débouchant (2) est réalisé avec une surface en coupe transversale qui est inférieure à deux fois l'épaisseur du faisceau de fibres (3) à tirer à travers celui-ci de telle sorte que le faisceau de fibres (3) est comprimé tout en étant tiré à travers.

9. Procédé (M) selon une des revendications 1 à 8, consistant en outre à :
tailler (M5) l'au moins un faisceau de fibres (3) tiré jusque dans le trou débouchant (2) de telle sorte qu'il se termine en étant aligné avec au moins une surface parmi la première surface et la seconde surface ; ou placer (M5') l'au moins un faisceau de fibres (3) tiré jusque dans le trou débouchant (2) contre au moins une surface parmi la première surface et la seconde surface.

10. Procédé (M) selon une des revendications 1 à 9, consistant en outre à :
former (M6) une couche de recouvrement (7) sur au moins une surface parmi la première surface et la seconde surface.

11. Procédé (M) selon une des revendications 1 à 10, consistant en outre à :
remplir (M7) le trou débouchant (2) contenant l'au moins un faisceau de fibres (3) avec un matériau matriciel.

12. Aiguille (8) destinée à renforcer un matériau cellulaire (1) avec un procédé (M) selon une des revendications 1 à 11, l'aiguille (8) comprenant :
une tige cylindrique (9) ;
un bord coupant (10) au niveau d'une pointe de la tige cylindrique (9) ; et
un crochet (11) intégré dans la tige cylindrique (9) pour saisir le faisceau de fibres (3) ;
**caractérisée en ce que**
la tige cylindrique (9) est formée avec au moins une cannelure hélicoïdale (12) configurée pour enlever l'excès de matériau dans un processus de perçage.

13. Aiguille (8) selon la revendication 12, dans laquelle le crochet (11) est réalisé sous la forme d'une rainure (13) à l'intérieur de la tige cylindrique (9).

14. Aiguille (8) selon la revendication 13, dans laquelle la rainure (13) s'étend au moins partiellement autour d'une surface latérale de la tige cylindrique (9).
